# EUROPÄISCHE PATENTSCHRIFT

(11) **EP 2 789 930 B1**
(45) Veröffentlichungstag und Bekanntmachung des Hinweises auf die Patenterteilung: **19.07.2017**
(21) Anmeldenummer: 13163367.9
(22) Anmeldetag: 11.04.2013
(51) Int. Cl.: F24J 2/32, F24J 2/34

(54) **Sonnenkollektor**
Solar panel
Collecteur solaire

(43) Veröffentlichungstag der Anmeldung: 15.10.2014
(73) Patentinhaber: KBB Kollektorbau GmbH, 12439 Berlin (DE); Institut für Solarenergieforschung GmbH, 31860 Emmerthal (DE)
(72) Erfinder: Fintelmann, Stephan, 16356 Werneuchen/Krummensee (DE); Rockendorf, Gunter, 30826 Garbsen (DE)
(74) Vertreter: Siekmann, Gunnar

(56) Entgegenhaltungen:
- FR-A1- 2 942 028
- JP-A- S6 044 769
- JP-A- S57 112 654
- JP-A- S58 138 946
- JP-A- S58 210 441
- JP-A- S59 200 159
- US-A- 4 505 261
- US-A- 4 513 732
- US-A- 4 686 961
- US-A1- 2011 253 127

## Beschreibung

Die Erfindung betrifft einen Sonnenkollektor mit mindestens einem Flächenabsorber und mehreren an den Flächenabsorber angeordneten Wärmerohren, die jeweils einen Kondensationsbereich aufweisen, wobei das Wärmerohr mindestens eine Biegung aufweist, wobei die Länge des Kondensationsbereichs größer ist als der Abstand des Wärmerohrs zu einem benachbarten Wärmerohr auf dem Flächenabsorber und die Wärmerohre einschließlich des Kondensationsbereichs einen konstanten Durchmesser aufweisen, wobei die Kondensationsbereiche benachbarter Wärmerohre parallel zueinander ausgerichtet sind.

Bei der Mehrzahl der handelsüblichen Sonnenkollektoren mit Vollflächenabsorbern kommt es, infolge einer nur unzureichenden Abführung der im Wärmekreislauf gespeicherten Wärmemenge zum Stagnationsfall, wobei sich die Wärmeträgerflüssigkeit in einem harfen- bzw. mäanderförmigen Rohrsystem sehr stark erwärmt, bis sie ihren Siedepunkt erreicht. Dies geschieht beispielsweise an Tagen mit hoher Sonnenstrahlenintensität und gleichzeitig geringem Wärmebedarf. In diesem Zustand kann die im Kollektor befindliche Flüssigkeit eine kritische Temperatur von mehr als 120° C erreichen, oberhalb der die Flüssigkeit verdampft. Der Kollektor selbst kann sich deutlich stärker erhitzen. Der Stagnationsfall führt folglich häufig zu Beschädigungen des Systems, da die Materialien hohem Druck und Temperaturen ausgesetzt werden. Dies gilt es zu vermeiden. Üblicherweise wird die Wärmeträgerflüssigkeit durch die Verdampfung aus dem Leitungssystem herausgedrückt, sodass der Kreislauf zerstörungsfrei bleibt. Die hohen Temperaturen aus dem Kollektor können jedoch in weitere entfernte Anlagenteile, z.B. zur Pumpe, gelangen und dort zu Schäden führen.

Zusätzlich können in direkt mit Trinkwasser durchströmten Sonnenkollektoren für Thermosiphonanlagen aufgrund des direkten Kontakts zum Trinkwasser Verkalkungs- und Korrosionsproblematiken auftreten.

Aus dem Stand der Technik ist bekannt, dass Vakuumröhrenkollektoren mit sogenannten Heatpipes (im weiteren Wärmerohre genannt) bei der Verwendung eines geeigneten Arbeitsmediums oberhalb einer definierbaren Temperatur keine Wärme mehr übertragen und somit einen simplen Stagnationsschutz aufzeigen.

Wärmerohre arbeiten nach dem Prinzip des zweiphasigen Thermosiphons. Sie zeichnen sich durch ein, in einem geneigtem Rohr, hermetisch verschlossenen Volumen aus. Dieses Rohr beherbergt ein geeignetes Arbeitsmedium (beispielsweise Wasser, Alkohole, Alkane, Kühlmittel), welches zu einem geringen Anteil, im unteren im Abschnitt, in flüssiger und zum größeren Anteil, im oberen Abschnitt, in gasförmiger Form vorliegt. Während der Wärmezufuhr ändert sich der Aggregatszustand von flüssig zu gasförmig. Das leichtere Gas steigt im Wärmerohr auf und kondensiert im oberen Abschnitt, da es dort seine aufgenommene Wärme an ein Medium (hier Wasser) mit niedrigerer Temperatur abgibt. Gravitationsbedingt fließt das kondensierte Arbeitsmedium wieder herab, wodurch sich der Arbeitskreislauf schließt.

Ein solcher Sonnenkollektor mit einem Flächenabsorber ist beispielsweise in der JP 59200159 beschrieben. Dieser weist eine Verdampfersektion mit einer Mehrzahl an Wärmeröhren auf, welche zwischen einem unteren und einem oberen Kopfende jeweils parallel zueinander angeordnet sind und zwischen denen Flügelflächen ausgebildet sind, um eine bessere Ausnutzung der Sonnenenergie zu erreichen. An den Kopfenden sind die Wärmerohre miteinander verbunden, wobei an die Kopfenden eine gemeinsame Wärmeleitung angeschlossen ist, welche zumindest abschnittsweise durch einen Wärmespeicher geführt ist und einen Wärmeübergang der Sonnenenergie in den Wärmespeicher ermöglicht. Die US 4,513,732 bezieht sich auf einen weiteren passiven Sonnenkollektor, mit dem Sonnenenergie ohne Pumpen oder elektrische Energie gespeichert werden soll. Dieser Sonnenkollektor weist einen Flächenabsorber sowie einen an den Flächenabsorber angeschlossenen, isolierten Wärmespeicher auf. Der Flächenabsorber setzt sich aus einem oder mehreren leicht geneigten Wärmerohren zusammen, wobei an die jeweiligen Wärmerohre wiederum Absorberflügel angeformt sind. Diese Wärmerohre erstrecken sich mit einem Ende aus dem Flächenabsorber heraus bis in den Wärmespeicher und sind parallel zueinander angeordnet. Die JP 58210441 offenbart einen solarbetriebenen Wassererhitzer, dem ein Sonnenkollektor aufweisend eine obere Glasplatte und eine untere Isolierschicht, mit zwischen der Isolierschicht und der Glasplatte angeordneten Wärmerohren zugeordnet ist. Die Wärmerohre sind jeweils parallel zueinander angeordnet und weisen an deren Enden jeweils diese miteinander verbindende Kopfenden auf, von denen ausgehend ein gemeinsames Wärmerohr in einen einen Wärmespeicher darstellenden Wassertank geführt ist, aus dem erwärmtes Wasser entnehmbar ist. Aus der FR 2942028 geht zudem ein Sonnenkollektor mit einem röhrenförmigen Absorber hervor, innerhalb dem ein Wärmeträgermedium in Wärmerohren zirkuliert, wobei die einzelnen Wärmerohre sowohl im Wärmespeicher als auch im röhrenförmigen Absorber gleiche Abstände zueinander aufweisen.

Häufig werden aufgrund der hervorragenden Stoffeigenschaften Wärmerohre mit Wasser als Arbeitsmedium verwendet. Diese Wärmerohre weisen eine hohe Wärmetransportfähigkeit auf, übertragen allerdings auch bei hohen Temperaturen Wärme und bieten damit keinen Stagnationsschutz. Durch die Verwendung einer bestimmten Masse eines anderen Arbeitsmediums (z.B. aus der Gruppe der Alkane) ist es möglich, dass sich ab einer bestimmten Temperatur nur noch Dampf im Wärmerohr befindet und damit der zweiphasige Prozess aus Verdampfung und Kondensation zum Erliegen kommt, womit ein Stagnationsschutz gegeben sein kann. Diese Arbeitsmedien weisen typischerweise eine geringere Wärmetransportfähigkeit auf.

Aus CN102032679A ist ein Kollektor mit Vollflächenabsorber bekannt, welcher mehrere parallel angeordnete Wärmerohre, anstelle eines durchgehenden, flüssigkeitführenden Rohres, aufweist. Die dort dargestellten Wärmerohre münden an ihrem oberen Ende (Kondensator) in einen, an den Kollektor angebrachten, Wassertank. Jedoch sind diese konventionellen Wärmerohre für den Einsatz in Vakuumröhrenkollektoren konzipiert und mit einem kurzen Kondensator ausgeführt. Durch eine Aufweitung am oberen Ende (Kondensator) der Wärmerohre eine größere Oberfläche geschaffen, welche für eine höhere Kollektoreffizienz sorgt. Dies ist die übliche Wärmerohrform im Vakuumröhrenkollektor, wobei dort die Wärme an ein Sammelrohr übertragen wird. Innerhalb bzw. am Wassertank von Thermosiphonanlagen steht allerdings im Gegensatz zum Sammlergehäuse von Vakuumröhrenkollektoren mehr Raum für die Ausbildung des längeren Kondensators zur Verfügung.

Ein weiterer Sonnenkollektor geht aus der US 4,686,961 hervor. Bei diesem sind mehrere Wärmerohre parallel zueinander angeordnet, die sich bis in einen Wärmespeicher, der einen Kondensationsbereich bildet, erstrecken. Die Wärmerohre der US 4,686,961 können je nach Ausführung Mittel aufweisen, um die mit einem Stagnationsfall einhergehenden hohen Drücke zu vermeiden, wobei die Wärmerohre über deren Länge immer den gleichen Abstand zueinander aufweisen. Insbesondere können die Wärmerohre dazu mit deren freien Ende aus dem Wärmespeicher herausgeführt sein oder Kondensationsrippen aufweisen.

Der Erfindung liegt die Aufgabe zugrunde, einen Sonnenkollektor der eingangs genannten Gattung aufzuzeigen, der im Stagnationsfall keiner Entleerung bedarf, dennoch keine Schäden davonträgt - also in seiner Funktionalität und Leistung nicht beeinträchtigt wird -,der keine Verkalkungs- und Korrosionsproblematiken aufzeigt und einen verbesserten Wärmeübergang im Kondensationsbereich bei gleichzeitig ausreichender Leistungsfähigkeit des Kollektors aufweist.

Die Lösung dieser Aufgabe erfolgt mit einem Sonnenkollektor mit den Merkmalen des Patentanspruchs 1. Vorteilhafte Ausgestaltungen der Erfindung sind in den Unteransprüchen angegeben.

Bei einem Sonnenkollektor mit mindestens einem Flächenabsorber und mehreren an dem Flächenabsorber angeordneten Wärmerohren, die jeweils einen Kondensationsbereich aufweisen, wobei das Wärmerohr mindestens eine Biegung aufweist, wobei die Länge des Kondensationsbereichs größer ist als der Abstand des Wärmerohrs zu einem benachbarten Wärmerohr auf dem Flächenabsorber und die Wärmerohre einschließlich des Kondensationsbereichs einen konstanten Durchmesser aufweisen, wobei die Kondensationsbereiche benachbarter Wärmerohre parallel zueinander ausgerichtet sind, ist erfindungswesentlich vorgesehen, dass sich die Kondensationsbereiche benachbarter Wärmerohre mindestens teilweise überlappen und mindestens in einem Teilbereich einen Abstand zueinander haben, der kleiner ist als der Abstand der Wärmerohre auf dem Flächenabsorber. Dadurch ist eine besonders platzsparende Anordnung der Wärmerohre auf dem Sonnenkollektor möglich. Außerdem können die Wärmerohre besonders einfach hergestellt werden, da auch die Kondensationsbereiche denselben Durchmesser aufweisen.

Ebenso lassen sich die Kondensationsbereiche besonders platzsparend und effizient anordnen. Dadurch, dass die Kondensationsbereiche benachbarter Wärmetauscher zumindest teilweise parallel zueinander angeordnet sind und mindestens in einem Teilbereich einen Abstand zueinander haben, der kleiner ist als der Abstand der zugehörigen Wärmerohre auf dem Flächenabsorber ist eine Wärmeaufnahme und eine Wärmeabgabe besonders gut möglich. Besonders bevorzugt berühren sich die Kondensationsbereiche in den überlappenden Bereich. In einer bevorzugten Ausgestaltung der Erfindung tritt mindestens ein Kondensationsbereich aus der Wand des Flächenabsorbers heraus. Dadurch kann der Kondensationsbereich getrennt zum Flächenabsorber und in einer besonderen Ausgestaltung ausgebildet werden. Bevorzugt sind die Wärmerohre mehrfach abgewinkelt und die Kondensationsbereiche sind in einem Wassertank des Sonnenkollektors angeordnet. Dadurch ist eine Energieübertragung auf das Wasser in einem Wassertank möglich. Zudem erfolgt die Kondensation besonders wirkungsvoll.

In einer alternativen Ausführungsform weist der Sonnenkollektor ein Sammelrohr auf, an dem die Kondensationsbereiche wärmeübertragend angeordnet sind. Dadurch ist es möglich, die Energie aus dem Kondensationsbereich auf ein Sammelrohr zu übertragen. Das Sammelrohr ist günstiger Weise mindestens einmal im Kollektor umgelenkt. Mit einer solchen Ausführungsform kann eine besonders raumsparende Anordnung erreicht werden. Das Sammelrohr weist bevorzugt eine Mehrzahl von Strängen auf. An diese können sich jeweils Kondensationsbereiche von verschiedenen Wärmerohren anlegen bzw. sind dort wärmeübertragend und in der Regel parallel dazu angeordnet. Dies gilt auch, wenn ein Sammelrohr vorhanden ist. Dadurch wird eine gute Wärmeübertragung erreicht. Zur Unterstützung der Wärmeübertragung ist das Sammelrohr über mindestens ein Wärmeleitblech mit den Kondensationsbereichen der Wärmerohre kontaktiert.

In einer anderen bevorzugten Ausgestaltung sind die Kondensationsbereiche in einem Wassertank des Sonnenkollektors angeordnet und weisen in dem Wassertank eine Biegung auf. Dadurch kann bevorzugt auch ein zylinderförmiger Wassertank verwendet werden. Die Kondensationsbereiche sind gebogen und folgen dabei im wesentlichen der Wandform des Wassertanks. Die Biegung entspricht dabei bevorzugt einem Teilkreis.

Daher ist es bei einer direkten Einführung in den Wassertank zweckmäßiger, die Wärmerohre länger auszubilden, ohne den Rohrdurchmesser zu erhöhen. Dies steigert die Wärme abführende Oberfläche des Kondensators und vereinfacht die Fertigung.

Die Erfindung zeichnet sich aus durch einen flächenförmig ausgebildeten Sonnenkollektor mit wenigstens einer transparente Eigenschaften aufweisenden Abdeckplatte, wenigstens einem unter der Abdeckplatte angeordneten Vollflächenabsorber mit mindestens einem beidseitig geschlossenen Wärmerohr. Vorzugsweise wird eine Mehrzahl von Wärmerohren in die Erfindung eingebracht, welche entweder für die direkte thermische Anbindung an einen dafür vorgesehenen Wassertank vorgesehen sind, bzw. thermisch an eine Sammelleitung angebunden sind, welche mit dem Wassertank verbunden ist. Unterhalb des Absorbers ist üblicherweise eine Wärmedämmschicht angeordnet.

Flachkollektoren weisen eine ebene Glasabdeckung mit parallel dazu angeordnetem flächigen Absorber auf. Sie bieten gegenüber Kollektoren mit einer Mehrzahl von aneinander geordneten Vakuumröhren den Vorteil, dass sie günstig herzustellen sind. Sie eignen sich daher insbesondere für Regionen mit hoher Sonnenintensität, wo das Kosten- / Nutzenverhältnis deutlich für den Einsatz von Kollektoren mit Vollflächenabsorbern spricht.

Ausführungsbeispiele der Erfindung, aus denen sich weitere erfinderische Merkmale ergeben, sind in den Zeichnungen dargestellt. Es zeigen:
- Fig.1:: Eine perspektivische Ansicht auf die erste Ausführungsform;
- Fig.2:: Eine perspektivische Ansicht auf die erste Ausführungsform mit angeschlossenem Wassertank und der Lage der darin angeordneten Wärmerohre;
- Fig.3:: Eine Ansicht der Unterseite des Absorbers;
- Fig.4:: Eine perspektivische Ansicht auf eine nicht erfindungsgemäße Ausführungsform der Erfindung, mit ungebündelten Wärmerohren, welche direkt zum Tank verlaufen;
- Fig.4a:: Eine Seitenansicht auf der Ausführungsform nach Fig.4;
- Fig.4b:: Eine Seitenansicht auf eine weitere Ausführungsform nach Fig.4;
- Fig.5:: Eine Ansicht der Absorberunterseite mit Wärmerohren um ein Sammelrohr gewunden;
- Fig.6:: Eine Ansicht der Absorberunterseite mit U-förmigen Sammelrohr;
- Fig.7:: Eine Ansicht der Absorberunterseite mit Wärmerohren ange¬-bunden an ein horizontales Sammelrohr mit Umlenkung;
- Fig.8:: Eine Ansicht der Absorberunterseite mit Wärmerohren angebunden an ein vertikales Sammelrohr mit Umlenkung;
- Fig.9:: Einen Ausschnitt der Absorberunterseite mit Zweistrangs¬-ammelrohr.

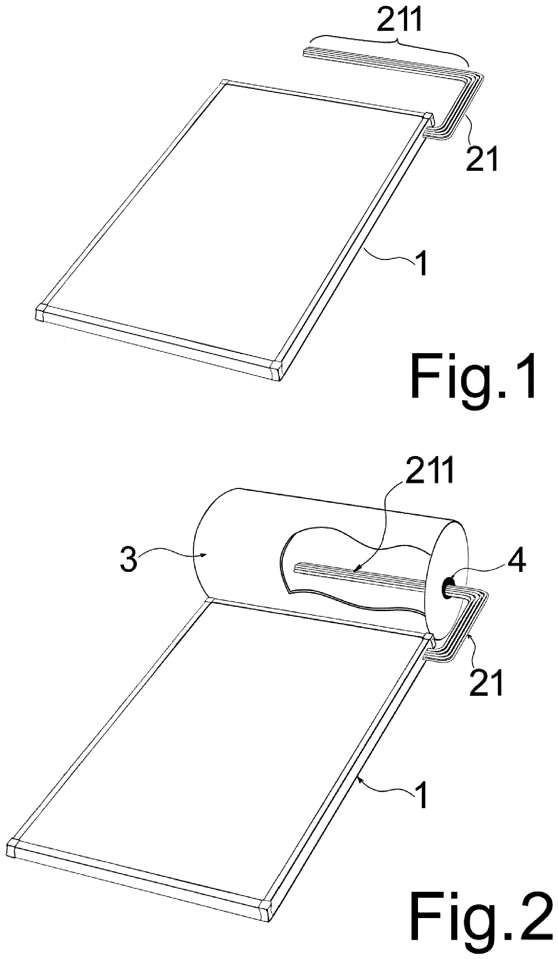

Fig.1 zeigt eine perspektivische Draufsicht auf die bevorzugte Ausführungsform der Erfindung. Dargestellt ist der Sonnenkollektor 1 mit den seitlich aus dem Rahmen austretenden, gebündelten Wärmerohren 21. In dieser Ausführungsform verlaufen die Wärmerohre 21 außerhalb des Kollektorrahmens in U-Form. Diese Form ermöglicht ein aufwandsarmes Einbringen der Wärmerohre 21 in einen dafür vorgesehenen Wassertank 3. Zudem verlaufen die Wärmerohre 21 entlang der Längsachse des Wassertanks 3, womit sie so die größtmöglichste gradlinige Strecke innerhalb des Wassertanks 3 zurücklegen. Daraus resultierend wird eine besonders große Wärme abführende Oberfläche geschaffen.

Der gebündelte Verlauf der Wärmerohre 21 ermöglicht eine unkomplizierte Isolierung der selbigen. Innerhalb des Wassertanks 3 wird allerdings eine Separierung der Wärmerohre 21 vorgezogen, sodass eine bessere Abgabe der Wärme an das im Wassertank 3 enthaltene Wasser erfolgen kann.

Zudem lassen sich so Sonnenkollektor 1 und Wassertank 3 getrennt fertigen und können auch erst am Einsatzort einfach zusammengefügt werden. Dies erleichtert die Herstellung, sowie den Transport und das Verpacken.

Das Innere der Wärmerohre 21 ist mit einer bestimmten Masse an geeignetem Arbeitsmedium (beispielsweise einem Alkan) befüllt. Im Wärmerohr 21 liegt nur das Arbeitsmedium vor. Es liegt zeitgleich sowohl in flüssiger als auch gasförmiger Phase vor, womit der Innendruck etwa dem Dampfdruck entspricht. Die Masse an Arbeitsmedium bestimmt dabei, ab welcher Betriebstemperatur das Arbeitsmedium nur noch gasförmig vorliegt.

Ist die Absorberoberfläche, mit den darunter angeschweißten Wärmerohren 21 der Sonnenstrahlung ausgesetzt, erwärmt sich das Absorberblech 22, welches die Wärme über die Wände der Wärmerohre 21 an das Arbeitsmedium überträgt. Durch den im Rohrvolumen vorherrschenden Dampfdruck, verdampft das Arbeitsmedium schon bei geringer Temperaturerhöhung. Das gasförmige Arbeitsmedium steigt im Wärmerohr 21 auf, bis es den kühleren Bereich im Innern des Wassertanks 3 bzw. an der Sammelleitung 23 erreicht. Dort angekommen kondensiert das Medium und fließt zurück in den unteren Bereich des Wärmerohres 21, wodurch der Arbeitskreislauf geschlossen wird. Durch Verwendung einer definierten Masse eines geeigneten Arbeitsmediums im Wärmerohr 21, welche ab einer bestimmten Temperatur komplett gasförmig vorliegt, wird die Stagnationstemperatur (also Maximaltemperatur) am Wassertank 3 bzw. an der Sammelleitung 23 ausgelegt. Aufgrund der Länge der Wärmerohrkondensatoren werden ausreichende Kollektorwirkungsgrade auch bei der Verwendung von anderen Arbeitsmedien als Wasser erreicht.

Um sicherzustellen, dass das kondensierte Medium wieder in den unteren Bereich des Wärmerohres 21 abfließt sind die Kondensatoren entsprechend gegenüber der Horizontalen geneigt, beziehungsweise werden bei einem geringen Neigungswinkel mit Dochten im Innern ausgeführt.

Fig.2 zeigt den Sonnenkollektor 1 in der ersten Ausführungsform der Erfindung und die Lage der Wärmerohre 21 innerhalb eines Wassertanks 3. Der Wassertank 3 besitzt eine seitliche Öffnung durch welche die Wärmerohre 21 eingeführt werden. Diese Öffnung wird nach der Einbringung der Wärmerohre 21 mit einer Abdichtung 4 verschlossen.

Das sich im Wassertank 3 befindliche Wasser erwärmt sich während des Betriebs und kann zum Gebrauch aus dem Wassertank 3 abgeleitet werden. Zeitgleich wird dann neues Wasser mit niedrigerer Temperatur in den Wassertank 3 eingeleitet, welches wiederum durch die Wärmerohre 21 erneut erwärmt wird.

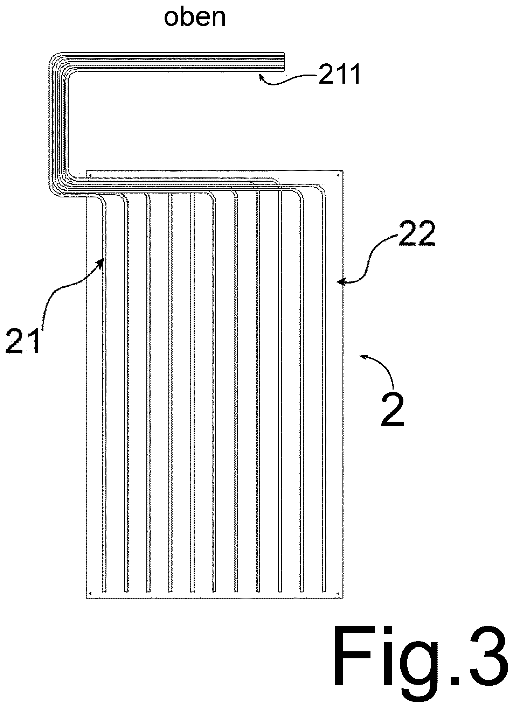

Fig.3 zeigt die, der Sonne abgewandten Seite, des offenbarten Flächenabsorbers 2. Zusehen sind die an das Absorberblech 22 angeschweißten, getrennt verlaufenden Wärmerohre 21, welche sich an der Blechkante bündeln und zusammengefasst in U-Form weiterverlaufen.

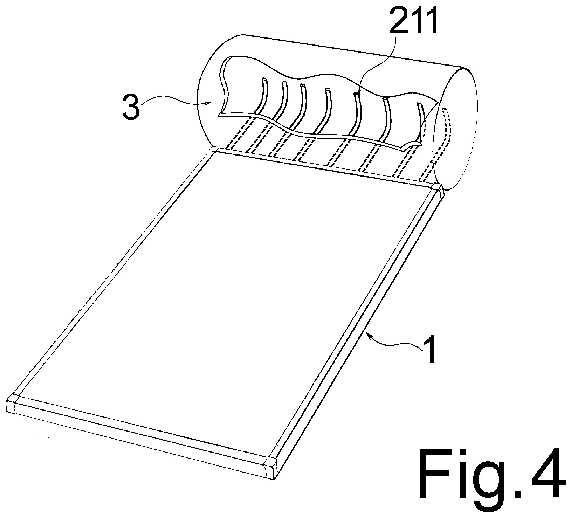

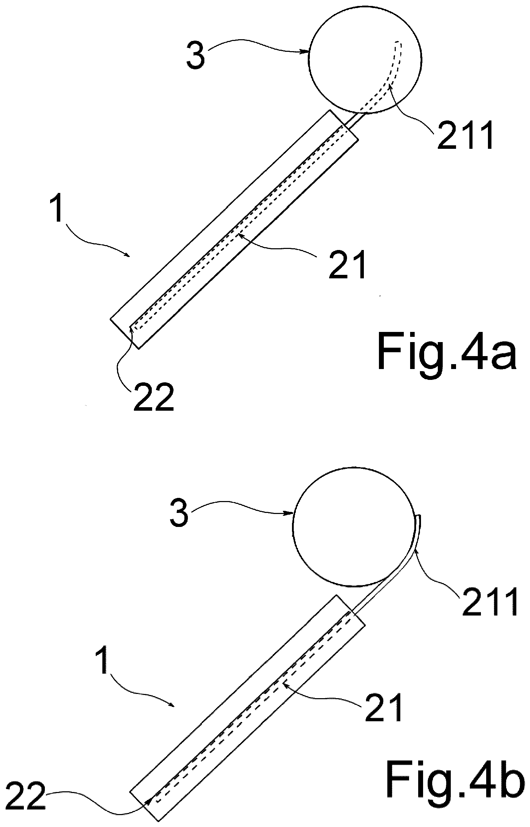

Fig.4 zeigt eine weiter mögliche Ausführungsform die nicht Teil der vorliegenden Erfindung ist, bei welcher die Wärmerohre 21 gradlinig, ohne sich außerhalb des Kollektors zu bündeln, längs zum Wassertank 3 verlaufen. Die Bauform mindert mögliche Wärmeverluste, da das Arbeitsmedium einen kürzeren Weg zum Wassertank 3 zurücklegen muss. Es ist denkbar, dass innerhalb des Wassertanks 3 die Kondensatoren 211 gebogen verlaufen, um so eine große Kondensatoroberfläche zu erzielen (Fig. 4a). Des Weiteren ist es denkbar, dass zur Vermeidung der Durchdringungen des Wassertanks die Wärmerohre außerhalb des Wassertanks verlaufen und mit dessen Oberfläche über die gesamte Länge des Wärmerohrkondensators kontaktiert sind (Fig. 4b).

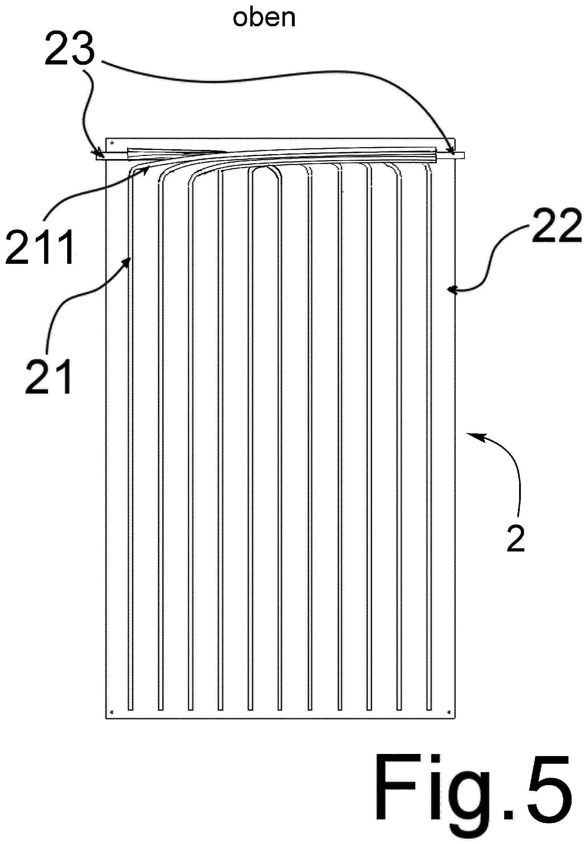

Fig. 5 zeigt eine weitere Ausführung der Erfindung, bei welcher die Kondensationsbereiche 211 der Wärmerohre an ein Sammelrohr 23 angeordnet sind, welches wiederum an einen Wassertank angeschlossen ist. Die Wärmeträgerflüssigkeit durchströmt das Sammelrohr 23 und nimmt so durch Wärmeübertragung die Energie von den Wärmerohren auf. Durch die weitaus einfachere hydraulische Verschaltung und größere Rohrdurchmesser des Sammelrohres im Gegensatz zu in der Absorberebene angeordneten durchströmten Rohrregistern können Verkalkungs- und Korrosionsproblematik vermindert bzw. vermieden werden.

Aufgrund des geringen Neigungswinkels der Kondensationsbereiche 211 gegenüber der Horizontalen in der in Fig.5 dargestellten Ausführungsform ist eine Verwendung von Dochten innerhalb der Kondensationsbereiche 211 sinnvoll, um sicherzustellen, dass das kondensierte Arbeitsmedium in den unteren Abschnitt der Wärmerohre 21 zurückfließt.

Weitere Ausfürungsformen der Erfindung mit mindestens einem andersartig geformten, beziehungsweise andersartig angeordneten Sammelrohr 23 sind denkbar. Wesentlich ist hierbei eine möglichst große Kontaktfläche zwischen Kondensationsbereiche 211 und Sammelrohr 23 für den Wärmeübergang zu schaffen. Dies lässt sich beispielsweise dadurch realisieren, dass die Kondensationsbereiche 211 mehrere Zentimeter entlang des Sammelrohres 23 verlaufen. Weiterhin sinnvoll ist in diesem Zusammenhang die Anwendung von Wärmeleitblechen, oder einer erhöhten Lotmenge als auch abgeflachter Kontaktflächen zwischen den Kondensationsbereiche 211 und dem Sammelrohr 23.

Um Druckverluste innerhalb des Solarkreislaufs gering zuhalten wird eine häufige Umlenkung des Sammelrohres vermieden. Es wird daher eine Anbindung der Kondensationsbereiche 211 an ein, zumindest in längeren Abschnitten, gerade verlaufendes Sammelrohr 23 bevorzugt.

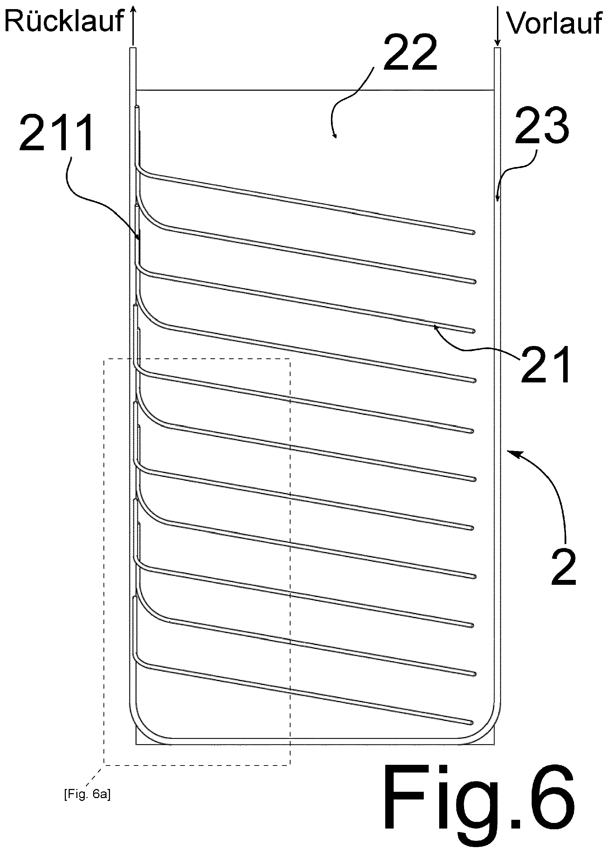

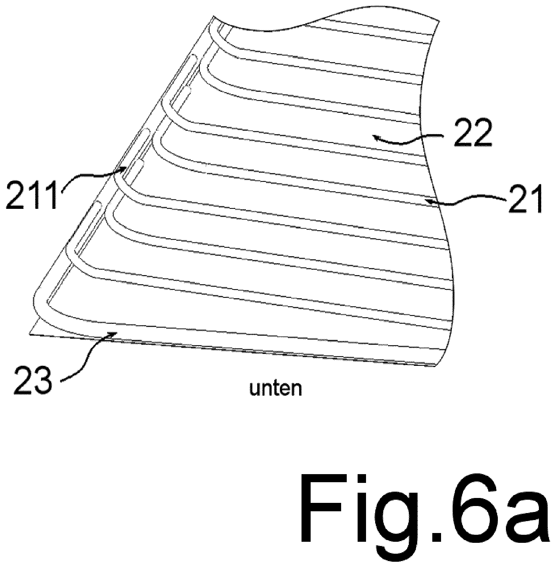

Fig.6 stellt die Unterseite einer Ausführungsform des Flächenabsorbers 2 dar, in welcher das Sammelrohr 23 U-förmig am Rand des Absorberblechs 22 verläuft. Die an einem langen, geraden Abschnitt des Sammelrohres 23 angeordneten Kondensationsbereiche 211 sind versetzt angeordnet um eine Überlappung zu bewirken, welche eine Ausbildung der Kondensationsbereich 211 und somit eine größere Kontaktfläche zum Sammelrohr 23 ermöglichen.

Die Wärmerohre 21 sind hierbei gegenüber der Horizontalen geneigt um den gewünschten Thermosiphoneffekt zu fördern. Auch hier wird das Sammelrohr 23 von einem Wärmeträgermedium durchströmt, welches die Energie über die Rohrwände von den Kondensatoren aufnimmt.

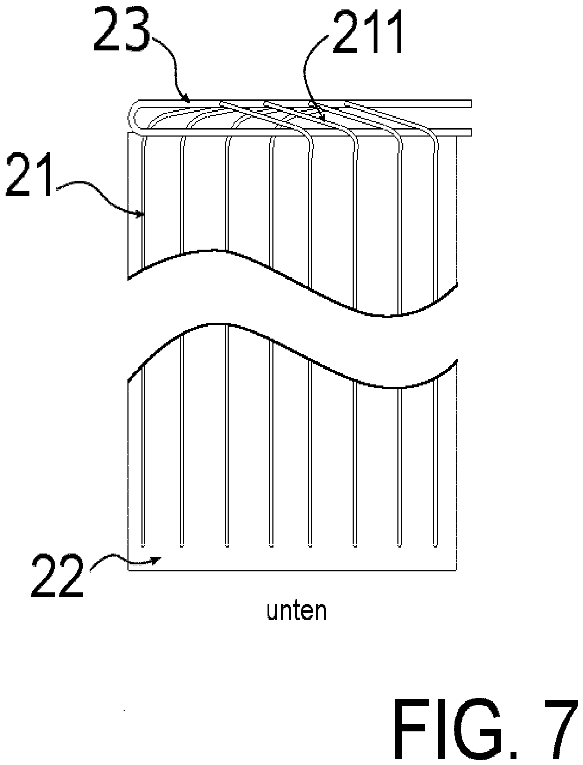

Fig.7 zeigt eine weitere Ausführung der Erfindung, bei welcher die Kondensationsbereiche 211 der Wärmerohre an ein Sammelrohr 23 mit mindestens einer Umlenkung angebunden sind, welches horizontal im Sonnenkollektor 1 verläuft und wiederum an einen Wassertank 3 angeschlossen ist. Durch einen größeren Neigungswinkel der Wärmerohrkondensatoren 211 zur Horizontalen wird die Wärmetransportfähigkeit der Wärmerohre 21 verbessert.

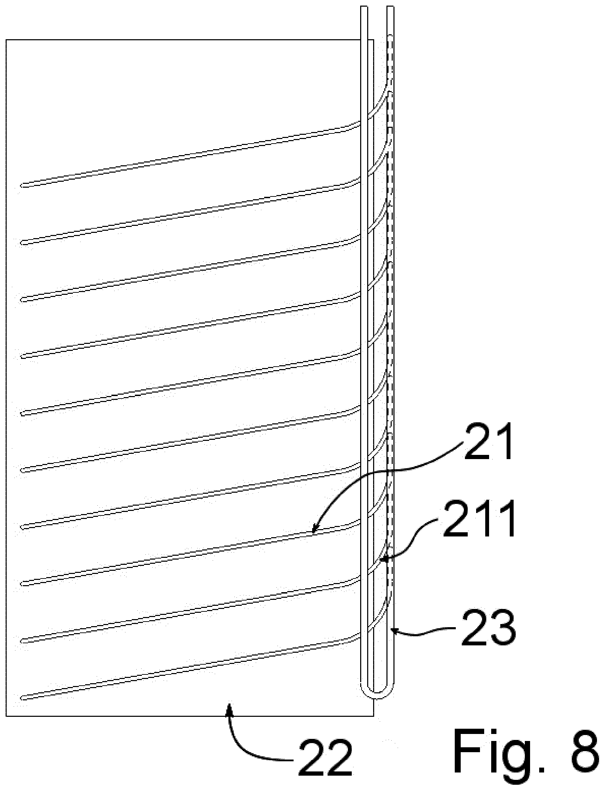

Fig.8 zeigt eine weitere Ausführung der Erfindung, bei welcher die Wärmerohre 21 zunächst quer zum Flächenabsorber 2 verlaufen und die Kondensationsbereich 211 der Wärmerohre an ein Sammelrohr 23 mit mindestens einer Umlenkung angebunden sind, welches vertikal im Sonnenkollektor 1 ausgeführt und wiederum an einen Wassertank 3 angeschlossen ist.

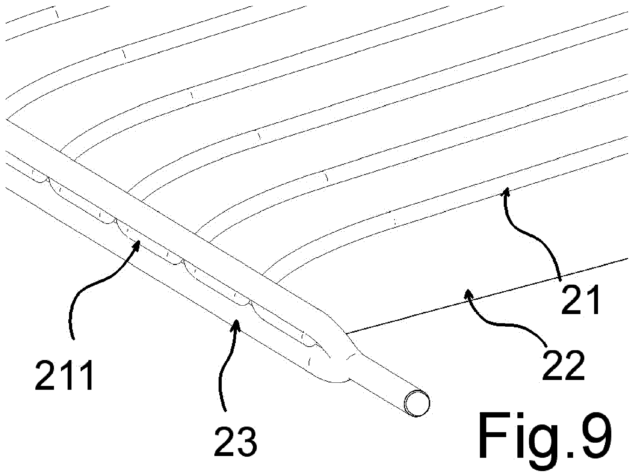

Fig.9 offenbart Ausführungsform der Erfindung, bei der das Sammelrohr 23 zunächst sich in zwei Stränge teilt, welche parallel entlang der Absorberlänge bzw. -breite verlaufen. Schließlich werden die zwei Stränge wieder zusammengeführt zu einem Strang. Die die Kondensationsbereiche 211 sind hierbei zwischen den beiden Strängen eingepasst und können somit ihre Energie über je zwei Kontaktstellen an das Sammelrohr 23 weitergeben, weshalb die Kondensationsbereiche 211 kürzer ausgebildet werden. Eine Ausführung mit mehr als zwei Strängen ist hierbei ebenfalls denkbar.

Die Ausführungsformen der Erfindung nach Fig.5 bis Fig.9 zeichnen sich dadurch aus, dass sie ebenfalls in solarthermischen Anlagen mit Zwangsumlauf des Wärmeträgermediums Verwendung finden können.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Sonnenkollektor mit mindestens einem Flächenabsorber (2) und mehreren an dem Flächenabsorber (2) angeordneten Wärmerohren (21), die jeweils einen Kondensationsbereich (211) aufweisen, wobei das jeweilige Wärmerohr (21) mindestens eine Biegung aufweist, wobei die Länge des Kondensationsbereichs (211) größer ist als der Abstand des Wärmerohrs (21) zu einem benachbarten Wärmerohr (21) auf dem Flächenabsorber (2) und die Wärmerohre (21) einschließlich des Kondensationsbereichs (211) einen konstanten Durchmesser aufweisen, wobei die Kondensationsbereiche (211) benachbarter Wärmerohre (21) parallel zueinander ausgerichtet sind,
**dadurch gekennzeichnet,**
**dass** sich die Kondensationsbereiche (211) benachbarter Wärmerohre (21) mindestens teilweise überlappen und mindestens in einem Teilbereich einen Abstand zueinander haben, der kleiner ist als der Abstand der Wärmerohre (21) auf dem Flächenabsorber (2).

2. Sonnenkollektor nach Anspruch 1, **dadurch gekennzeichnet, dass** benachbarte Kondensationsbereiche (211) zumindest in Teilbereichen aneinander anliegen.

3. Sonnenkollektor nach einem der vorhergehenden Ansprüche, **dadurch gekennzeichnet, dass** mindestens ein Kondensationsbereich (211) aus der Wand des Flächenabsorbers (2) heraustritt.

4. Sonnenkollektor nach einem der vorhergehenden Ansprüche, **dadurch gekennzeichnet, dass** die Wärmerohre (21) mehrfach abgewinkelt sind und die Kondensationsbereiche (211) in einem Wassertank (3) des Sonnenkollektors (1) angeordnet sind.

5. Sonnenkollektor nach Anspruch 1, **dadurch gekennzeichnet, dass** der Sonnenkollektor (1) ein Sammelrohr (23) aufweist, an dem die Kondensationsbereiche (211) wärmeübertragend angeordnet sind.

6. Sonnenkollektor nach Anspruch 5, **dadurch gekennzeichnet, dass** das Sammelrohr (23) mindestens einmal im Sonnenkollektor (1) umgelenkt ist.

7. Sonnenkollektor nach einem der Ansprüche 5 bis 6, **dadurch gekennzeichnet, dass** das Sammelrohr (23) eine Mehrzahl von Strängen aufweist.

8. Sonnenkollektor nach einem der Ansprüche 5 bis 7, **dadurch gekennzeichnet, dass** das Sammelrohr (23) über mindestens ein Wärmeleitblech mit den Kondensationsbereichen der Wärmerohre kontaktiert ist.

9. Sonnenkollektor nach Anspruch 1, **dadurch gekennzeichnet, dass** die Kondensationsbereiche (211) in einem Wassertank (3) des Sonnenkollektors (1) angeordnet sind und in dem Wassertank (3) eine Biegung aufweisen.

## Claims

1. Solar panel with at least one absorber surface (2) and a plurality of heat pipes (21) disposed on the absorber surface (2), each of which has a condensing region (211), wherein the respective heat pipes (21) includes at least one bend, wherein the length of the condensing region (211) is greater than the distance between the heat pipe (21) and an adjacent heat pipe (21) on the absorber surface (2), and the heat pipes (21) including the condensing region (211) have a constant diameter, wherein the condensing regions (211) of adjacent heat pipes (21) are aligned parallel to each other,
**characterised in that**
the condensing regions (211) of adjacent heat pipes (21) at least partially overlap each other, and at least in subregions thereof the distance between said condensing regions is smaller than the distance between the heat pipes (21) on the absorber surface (2).

2. Solar panel according to claim 1, **characterised in that** adjacent condensing regions (211) lie flush against each other at least in subregions thereof.

3. Solar panel according to either one of the preceding claims, **characterised in that** at least one condensing region (211) projects from the wall of the absorber surface (2).

4. Solar panel according to any one of the preceding claims, **characterised in that** the heat pipes (21) are angled more than once and the condensing regions (211) are arranged in a water tank (3) of the solar panel (1).

5. Solar panel according to claim 1, **characterised in that** the solar panel comprises a manifold (23) on which the condensing regions (211) are arranged to enable heat transfer.

6. Solar panel according to claim 5, **characterised in that** the manifold (23) is redirected at least once inside the solar panel (1).

7. Solar panel according to either of claims 5 and 6, **characterised in that** the manifold (23) includes a plurality of strands.

8. Solar panel according to any one of claims 5 to 7, **characterised in that** the manifold (23) is in contact with the condensing regions of the heat pipes via at least one heat conducting plate.

9. Solar panel according to claim 1, **characterised in that** the condensing regions (211) are arranged in a water tank (3) of the solar panel (1) and the portion thereof in the water tank (3) includes a bend.

## Revendications

1. Capteur solaire avec au moins un absorbeur plan (2) et plusieurs tubes thermiques (21) placés sur l'absorbeur plan (2), qui comportent chacun une zone de condensation (211), le tube thermique (21) respectif présentant au moins une courbure, la longueur de la zone de condensation (211) étant supérieure à l'écart entre le tube thermique (21) et un tube thermique (21) voisin sur l'absorbeur plan (2)et les tubes thermiques (21), y compris la zone de condensation (211) présentant un diamètre constant, les zones de condensation (211) de tubes thermiques (21) voisins étant orientés à la parallèle les unes des autres,
**caractérisé en ce que**
les zones de condensation (211) de tubes thermiques 21) voisins se chevauchent au moins partiellement et présentent au moins dans une zone partielle un écart mutuel qui est inférieur à l'écart entre les tubes thermiques (21) sur l'absorbeur plan (2).

2. Capteur solaire selon la revendication 1, **caractérisé en ce que** des zones de condensation (211) voisines sont adjacentes au moins dans des zones partielles.

3. Capteur solaire selon l'une quelconque des revendications précédentes, **caractérisé en ce qu'**au moins une zone de condensation (211) sort de la paroi de l'absorbeur plan (2).

4. Capteur solaire selon l'une quelconque des revendications précédentes, **caractérisé en ce que** les tubes thermiques (21) sont plusieurs fois coudés et les zones de condensation (211) sont placées dans une réservoir d'eau (3) du collecteur solaire (1).

5. Capteur solaire selon la revendication 1, **caractérisé en ce que** le capteur solaire (1) comporte un tube collecteur (23) sur lequel les zones de condensation (211) sont placées de manière à transmettre la chaleur.

6. Capteur solaire selon la revendication 5, **caractérisé en ce que** le tube collecteur (23) change de direction au moins une fois dans le capteur solaire (1).

7. Capteur solaire selon l'une quelconque des revendications 5 à 6, **caractérisé en ce que** le tube collecteur (23) comporte une pluralité de tronçons.

8. Capteur solaire selon l'une quelconque des revendications 5 à 7, **caractérisé en ce que** le tube collecteur (23) est connecté par l'intermédiaire d'au moins une tôle thermoconductrice avec les zones de condensation.

9. Capteur solaire selon la revendication 1, **caractérisé en ce que** les zones de condensation (211) sont placées dans un réservoir d'eau (3) du capteur solaire (1) et comportent une courbure dans le réservoir d'eau (3).
